# EUROPEAN PATENT SPECIFICATION

(11) **EP 3 785 878 B1**
(45) Date of publication and mention of the grant of the patent: **07.06.2023**
(21) Application number: 20188244.6
(22) Date of filing: 28.07.2020
(51) Int. Cl.: B29C 45/16, B29C 45/76, B29C 45/17

(54) **MULTISTEP MOLDING METHOD AND MULTI-STATION MOLD FOR MAKING COLORED PLASTIC COMPONENTS WITH HIGH AESTHETIC VALUE**
MEHRSTUFIGES FORMVERFAHREN UND MEHRSTATIONENFORM ZUR HERSTELLUNG VON FARBIGEN KUNSTSTOFFKOMPONENTEN MIT HOHEM ÄSTHETISCHEM WERT
PROCÉDÉ DE MOULAGE EN PLUSIEURS ÉTAPES ET MOULE À STATIONS MULTIPLES POUR LA FABRICATION DE COMPOSANTS EN PLASTIQUE COLORÉS À HAUTE VALEUR ESTHÉTIQUE

(30) Priority: 28.08.2019 IT 201900015141
(43) Date of publication of application: 03.03.2021
(73) Proprietor: Sapa S.P.A., 20144 Milano (MI) (IT)
(72) Inventor: AFFINITA, Antonio, 80121 Napoli I(NA) (IT)
(74) Representative: Fiammenghi, Eva

(56) References cited:
- WO-A1-2007/101747
- DE-A1-102008 047 564
- US-A1- 2017 165 891

## Description

### Field of the art

The present invention operates in the field of plastic components made by means of injection molds. More in detail, the plastic components of interest have at least one painted side which remains visible. Still more specifically, such colored plastic components are adapted to be mounted on a motor vehicle.

### Prior art

The technique of injection molding has been known for many years and is continuously evolving also due to the numerous valid patents, owned by the same Applicant as the enclosed. At the present state of the art, with regard to the painted - hence colored - articles, the most advanced technique seems to be that represented by the patent EP2207659B1, which regards the production of coated molded articles. The abovementioned patent claims a rotary injection mold with two stations modified in a manner such that, after the injection of the thermoplastic material in the first station, a space (interspace) is extended in the second station, between the external surface of the molded article and the internal surface of the second station of the mold.

Such interspace, which normally is 5-10 mm, is filled with a reactive mixture by means of injection molding; and in order to harden the reactive mixture, the temperature in at least one part of the injection mold is increased.

The technical problem that the abovementioned patent intends to resolve is the strong susceptibility of the painted visible surfaces to being scratched. The presence of scratches would render the produced plastic components unacceptable for the final client.

A second problem resolved by the same patent is to render the component production and coloring process less expensive.

In order to do this, the process is made faster by means of the modification of the temperature of one of the two interspaces during the 60 seconds of hardening of the material.

The objective of the present patent, however - which remains unresolved by all the techniques present on the market - is that of being able to add working steps to the production process in a manner such to not prolong the times for attaining the single element.

At the same time, it is intended to maintain the high quality of the painting that is already provided with the prior art.

WO2007/101747 relates to a method and a device for producing a plastic part that consists of a plurality of components. The device comprises a closing unit for receiving at least one mold in which a thermoplastic molded body can be shaped or positioned, and at least one polyurethane unit for introducing a polyurethane material into a larger cavity comprising the thermoplastic molded body. The invention of WO2007/101747 is characterized in that at least one additional polyurethane unit for introducing an additional polyurethane material having different product properties into the same or a different, larger cavity, is provided or in that the first polyurethane unit is adapted for an additional polyurethane material having different product properties being introduced into the same or a different, larger cavity. DE102008047564 relates to a method and a device for manufacturing plastic products with an integrated reinforcement structure. Here, a pliable tissue is first placed on a cavity surface of a molding tool and successively coated with plastic on the different sides.

US2017/165891 discloses an injection molding system that includes a plurality of inspection apparatuses for inspecting molded article quality, a unit that transports a molded article molded by an injection molding machine, a molded article containment unit that is provided for each of types of post-treatment operations needed for the molded article, a transport destination designation unit that selects and designates the molded article containment unit to contain the molded article on the basis of a combination of inspection results from the plurality of inspection apparatuses, and a molded article sorting and transport unit that sorts and transports the molded article into the molded article containment unit designated by the transport destination designation unit.

It should be underlined that the technique for cooling and heating the interspace of the mold is commonly known, in order to determine a quicker hardening of the polymers contained therein, with the consequent increase of the consumptions of the entire industrial plant. For this reason, a further objective of the present invention is to make the production less expensive, by proposing a mold and a process which avoid such temperature variations.

### Description of the invention

According to the present invention, a multistep molding method and relative multi-station mold for making colored plastic components with high aesthetic value are attained, which effectively resolves the abovementioned problems.

Advantageously the mold of the present invention, which is adapted to make colored (painted) plastic components of motor vehicles, comprises a plurality of injection stations, a plurality of control stations and at least one unloading station, arranged around a rotary table.

Preferably said painted plastic component, adapted to be mounted on any one motor vehicle, is constituted by a plurality of co-molded layers comprising at least one support, commonly termed "fourth wall", a visible portion in jargon termed "skin" and a colored coating.

The mold cyclically takes on a closed configuration in which the injections of the polymers occur in the respective interspaces and an open configuration, in which the central rotary table rotates, transferring the content of the interspace of each station to the subsequent station. During the rotation, said rotary table has the just-molded plastic component at the control stations situated between one injection station and the next.

Said control stations are advantageously preset for verifying the correspondence of characteristics such as the color and the thickness of the scanned plastic element. The tolerance values are set by a computer in I/O communication with said control stations.

More in detail, said stations are:
- a first injection station adapted to receive the punch of the rotary table coming from the unloading station, and hence is empty. This is adapted to inject, in the relative interspace, the thermoplastic material (preferably ABS, PC+ABS, PC, PC+PBT, PC+ASA, ASA) suitable for forming the visible portion of the object to be attained, i.e. the "skin";
- a second injection station adapted to receive the punch of the rotary table coming from the first station and hence the interspace of the second station will already be partially filled with the "skin" of the object to be attained. In the second injection station, the introduction of the plastic material (preferably ABS, PC+ABS, PC, PC+PBT, PC+ASA, ASA) into the relative interspace occurs, such plastic material suitable for forming the support, i.e. the "fourth wall" of the object to be attained, superimposing it on said "skin";
- a third injection station adapted to receive the punch coming from the second station and hence the interspace will already be partially filled with the "fourth wall" and the visible portion. The third station injects, into the relative interspace, the colored plastic material (preferably a reactive mixture based on polyol, isocyanate and dye) adapted to coat the external surface of the visible portion of the object to be attained;
- an unloading and sorting station, in which a mechanical mover grasps the piece by now solidified and ready in order to move it away from the mold, and it arranges it on a conveyor belt which moves it away from the mold.

Possibly, in one embodiment of the present invention which could have advantageous effects, the third injection station and the unloading station can coincide.

With each closure of the mold, three simultaneous injections occur, advantageously optimizing the production times. The duration of the closed configuration of the mold can last from 30 seconds to 120 seconds, preferably 60 seconds; within such time, all the initially molten polymers will have solidified inside the respective interspaces.

With each opening of the mold, therefore, a rotation of the rotary table occurs and an unloading of a finished object from the unloading station occurs.

Among the main advantages of the present invention, moreover, there is a further optimization of the times. During the rotation of the rotary table, when the mold is in the open configuration, the just-molded elements are simultaneously subjected to the control stations which verify the presence of possible imperfections thereof, depressions or lack of plastic material. Said control stations are the following:
- a first control station placed between the first injection station and the second injection station. The first control station is adapted to execute an optical control on the just-injected "skin";
- a second control station interposed between the second injection station and the third injection station. The second control station executes a first step of size control of the just-molded "fourth wall" and a second step of optical control of the color of the visible surface;
- a third control station interposed between said third injection station and the unloading and sorting station. The third control station executes a final step of size control and a final step of color control.

Advantageously, all the control stations are in data communication with the computer from which the size and colorimetric tolerances are set, which distinguish between an acceptable piece and one to be discarded.

Should the first or the second control station detect slight imperfections, which in any case do not exceed the tolerance thresholds, advantageously the computer in the preferred embodiment of the present invention will lower the acceptable thresholds for the third control station.

The latter station is that adapted for the final detection of the acceptability of the piece or if instead the piece must be discarded. Indeed in this final station, therefore, the final judgement is given and is communicated to said computer which, in turn, sends to the unloading and sorting station the command regarding where to position the just-unloaded piece: if on the belt of the accepted pieces or on that of the pieces to be discarded.

In an alternative version of the present mold, the control stations are configured in the same way as the injection stations. The rotary table will therefore have seven sides and, with mold closed, three of the pieces under production will be subjected to an accurate optical, colorimetric and size scanning, while other three pieces are in injection phase.

Finally, a further advantage of the mold, which ensures the production of painted pieces with very high aesthetic value, provides for arranging a filter immediately downstream of each introduction nozzle in order to prevent the introduction of possible impurities into the plastic mixture.

The advantages offered by the present invention are evident in light of the description set forth up to now, and will be even clearer due to the enclosed figures and to the relative detailed description.

### Description of the figures

The invention will be described hereinbelow in at least one preferred embodiment, as a non-limiting example with the aid of the enclosed figures, in which:
- FIGURE 1 shows the flow diagram of the method, object of the present invention.
- FIGURE 2 represents the mold 200 in the open configuration;

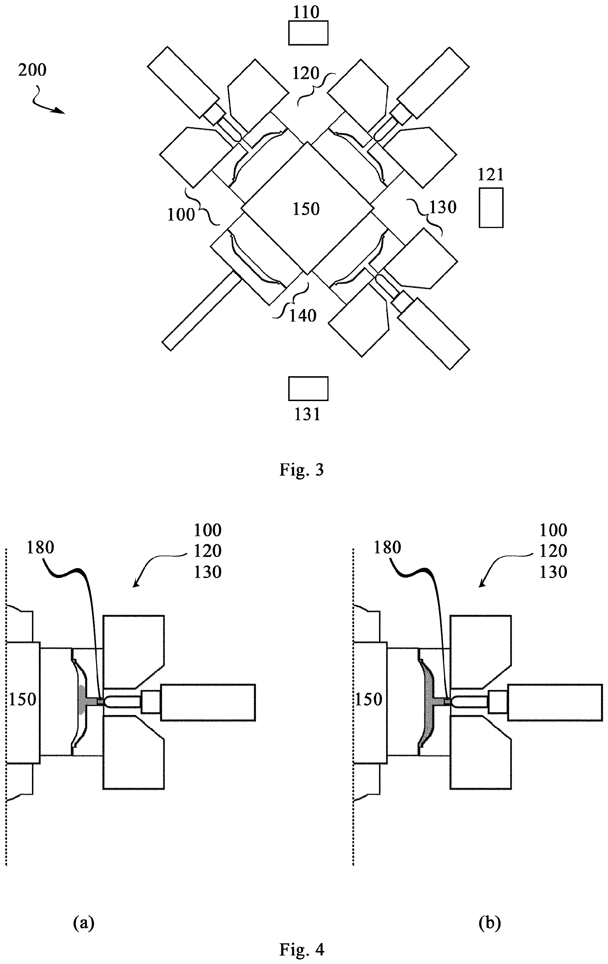

- FIGURE 3 illustrates the mold 200 in the closed configuration;
- FIGURE 4 shows in detail the injection of plastic material that occurs in any one of the injection stations 100-120-130. In particular, in this figure, the filter 180 is observed positioned immediately downstream of the introduction nozzle;

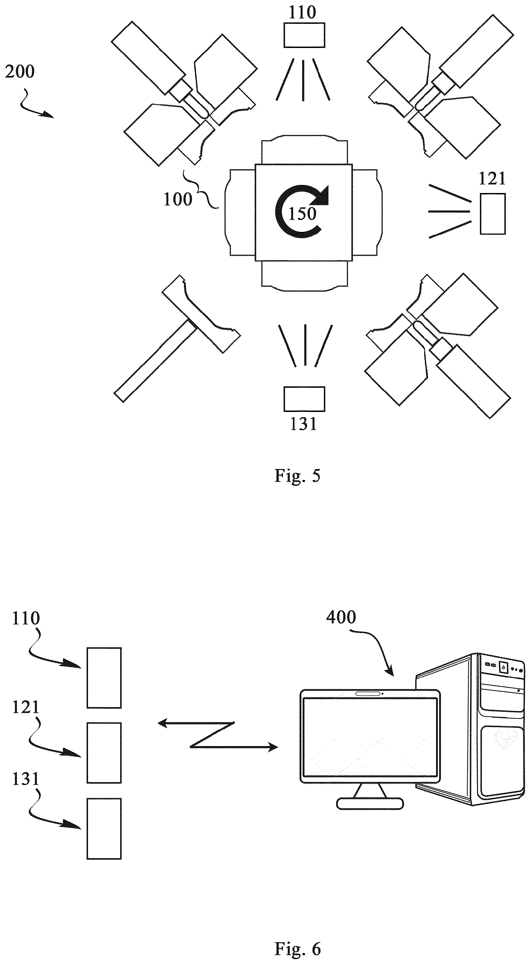

- FIGURE 5 shows the subsequent opening of the mold 100 and the rotation of the rotary table 150 during which the control stations 110-121-131 inspect the just-molded plastic material;
- FIGURE 6 schematically shows the communication between said control stations 110-121-131 and a computer 400.

### Detailed description of the invention

The present invention will now be illustrated as a merely non-limiting or non-binding example, with reference to the figures which illustrate several embodiments relative to the present inventive concept.

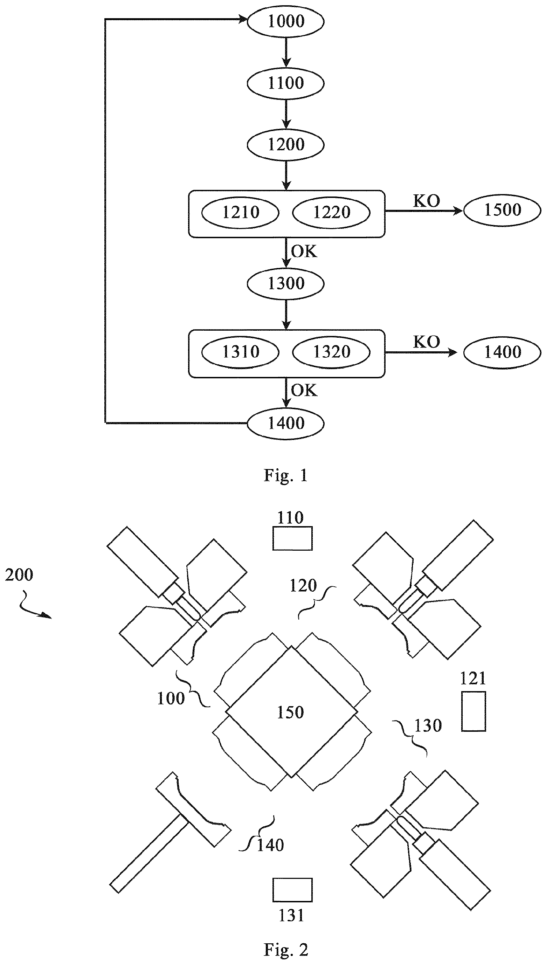

With reference to FIG. 1, the flow diagram is shown which represents the production method that the above-described mold 200 executes, in the embodiment thereof deemed most advantageous at present.

In a first introduction station 100, there is the first step 1000 of introducing the plastic mixture which constitutes the visible part of the plastic element being produced. As in all the introduction stations 100-120-130 downstream of the introduction nozzle, there is a filter 180 which retains the possible impurities.

After waiting for the time of solidification of the polymer, in a range of 60 seconds, the mold 200 which is situated in a closed configuration opens and the rotary table 150 present at the center rotates.

During the rotation, the just-molded piece crosses a first control station 110 where an optical scanner carries out a first control step 1100, i.e. verification of the uniformity of the obtained color. The positive or negative outcome of such verification is determined by the tolerance thresholds preset in a computer 400. In case of positive outcome, the method will proceed without intermediate steps. In case of detection of a value very close to the limit threshold, the computer will determine the lowering of the acceptable tolerances in the subsequent controls. In case of excessive exceeding of the limit threshold, the piece will be immediately discarded. The rotary table 150 continues its rotation up to presenting the just-molded piece at a second injection station 120. Here, the second injection phase 1200 occurs in which - in the interspace of the mold, which newly assumes the closed configuration - the support, or "fourth wall" is injected, superimposing such wall on the "skin".

As before, after waiting for the solidification of the injected polymer, the mold 200 is newly opened and the rotary table 150 ensures that the molded element undergoes a second control step 1210-1220 in a second control station 120. More in detail, a size control 1210 will first be executed, in order to control that the thickness of the material is constant and that there are no depressions, and subsequently there is a colorimetric control 1220.

As in the preceding control step 1100, the piece can be approved, discarded if the limit thresholds have been exceeded or it can be placed "under observation" 1500, i.e. the tolerance thresholds will be lowered for the subsequent control since the detected values are very close to the threshold preset by means of said computer 400.

After moving beyond the second control station 120, the rotary table 150 arranges the molded piece at a third injection station 130, in which the colored polymer which acts as a coating for the piece is injected with mold 200 closed, in a third injection phase 1300.

Upon solidification also of this third polymer component, the mold 200 is newly opened and the rotary table 150 will subject the finished component to a third control station 131 which will sequentially proceed to a third step of size 1310 and colorimetric 1320 control.

On the basis of the tolerance parameters - possibly lowered following the controls upstream - the third control station 131 will send the detected data to the computer 400 which, by governing an unloading and sorting station 140, will determine if, in the sorting step 1400, the just-obtained piece will be situated on a conveyor belt dedicated for the accepted pieces or on a belt dedicated for the pieces to be discarded.

Finally, it is clear that modifications, additions or variations that are obvious for the man skilled in the art can be made to the invention described up to now, without departing from the protective scope that is provided by the enclosed claims.

## Claims

1. Multi-station mold (200) for making colored plastic components with high aesthetic value, provided with a rotary table (150) provided with a plurality of sides, each of which comprising at least one matrix with the desired shape of the plastic component, said mold (200) comprising a plurality of punches adapted to be reversibly closed on said matrices of said rotary table (150), each punch defining an injection station for injecting a plastic polymer adapted to constitute a part of the plastic component under production; said mold (200) being adapted to cyclically take on a first closed configuration, in which the pressure injection occurs, in said injection stations, of a predetermined plastic polymer within the relative interspace, and a second open configuration in which the matrices of said injection stations are far away from said central rotary table (150) in order to allow said rotary table (150) to rotate around the axis thereof, transferring the content of the interspace of each station to the subsequent station; said mold (200) comprising:
- a first injection station (100) adapted to receive one of the punches of said empty rotary table (150); said first injection station (100) being adapted to inject in the relative interspace the plastic material suitable for forming the visible portion of the plastic component to be made, commonly termed "skin";
- a second injection station (120) adapted to receive one of the punches of said rotary table (150) coming from said first control station (110) and therefore the interspace of said second station (120) already being partially filled with said "skin" of the plastic component to be made; said second injection station (120) being adapted to inject, in the relative interspace, the plastic material adapted to constitute the support, commonly named the "fourth wall" of the plastic component to be made, superimposing it on said "skin";
- a third injection station (130) adapted to receive one of the punches of said rotary table (150) coming from said second station (120) and therefore the interspace of said third station (130) already being partially filled with said "fourth wall" and said visible portion of the plastic component to be made; said third injection station (130) being adapted to inject, in the relative interspace, the colored plastic material adapted to paint the external surface of the visible portion of the plastic component to be made;
said multi-station mold (200) being **characterized in that** it comprises:
- a first control station (110) adapted to execute an optical scanning of the product coming from the first injection station (100), sending the detected colorimetric data to a computer (400);
- a second control station (121) adapted to execute an optical scanning of the product coming from the second injection station (120), sending the detected size and colorimetric data to said computer (400);
- a third control station (131) adapted to execute an optical scanning of the product coming from the third injection station (130), sending the size and colorimetric data to said computer (400);
- an unloading and sorting station (140) in which, by means of a common mechanical mover, the just-produced plastic component is grasped and placed on a first conveyor belt for the accepted products or a second conveyor belt for the products to be discarded;
- said computer (400), which is adapted to receive all the data from said control stations (110-121-131) and to execute a comparison with the pre-established limit values, possibly emitting an alarm signal if such limits are exceeded.

2. Multi-station mold (200) for making colored plastic components with high aesthetic value, according to the preceding claim 1, **characterized in that** said third control station (131) and said unloading station (140) coincide.

3. Multi-station mold (200) for making colored plastic components with high aesthetic value, according to any one of the preceding claims 1 or 2, **characterized in that** it is adapted to execute the opening of the matrices and the rotation of said rotary table (150) at regular and pre-established time intervals of a time comprised between 30 seconds and 120 seconds, preferably 60 seconds.

4. Multi-station mold (200) for making colored plastic components with high aesthetic value, according to any one of the preceding claims, **characterized in that** immediately downstream of each introduction nozzle of each introduction station (100-120-130), a filter (180) is present that is adapted to retain possible impurities present in the injected polymer mixture.

5. Multistep molding method for making colored plastic components with high aesthetic value, executed by a multi-station mold (200) according to any one of the preceding claims, comprising the following steps which are cyclically repeated:
- first injection (1000) of the visible portion or "skin" of the plastic component to be made, in the interspace of a first injection station (100) of a mold (200) with rotary table (150) according to any one of the preceding claims;
- wait for the time of solidification of the plastic material, first opening of the mold (200), first rotation of said rotary table (150);
- new closure of the mold (200) and second injection (1200) of the support or "fourth wall" of the plastic component to be made, in the interspace of a second injection station (120) of said mold (200), said interspace having at its interior, before the second injection, said "skin" already solidified;
- wait for the time of solidification of the plastic material, second opening of the mold (200), second rotation of said rotary table (150);
- new closure of the mold (200) and third injection (1300) of the plastic polymer for coating said visible portion of the plastic component to be made, in the interspace of a third injection station (130) of said mold (200); said interspace having at its interior, before the third injection (1300), said "fourth wall" and said visible portion already solidified;
- wait for the time of solidification of the plastic material, third opening of the mold (200), third rotation of said rotary table (150);
said method being **characterized in that** it comprises:
- a first optical control (1100) in a first control station (110) and sending of the detected size data to a computer (400) preset with the size acceptability limit thresholds and with possible tolerances;
- a second optical control including a size control step (1210) and a colorimetric control step (1220) for verifying thickness and color of the entire component, sending the detected data to said computer (400) preset with the size acceptability limit thresholds and with possible tolerances;
- a third optical control including a size control step (1310) and a colorimetric control step (1320) for verifying thickness and color of the entire component, sending the detected data to said computer (400) preset with the size acceptability limit thresholds and with possible tolerances;
- new closure of the mold (200) and unloading of the plastic component in an unloading station (140) of said mold (200) by means of a common mechanical mover which grasps the plastic component that has by now been painted and moves it away from said mold (200) on a first conveyor belt dedicated for the accepted pieces and on second conveyor belt dedicated for the pieces to be discarded since they were found to exceed the preset thresholds.

6. Multistep molding method for making colored plastic components with high aesthetic value, according to the preceding claim 5, **characterized in that** said computer (400) is adapted to emit an alarm signal (1500) if any one of the control stations (110-121-131) detected a value exceeding the preset threshold limits.

7. Multistep molding method for making colored plastic components with high aesthetic value, according to any one of the preceding claims 5 or 6, **characterized in that** if the first control station (110) or the second control station (121) should detect values within a tolerance range of said threshold limits, said computer (400) executes a reduction of the tolerance limits for the subsequent control station.

8. Multistep molding method for making colored plastic components with high aesthetic value, according to any one of the preceding claims 5 to 6, **characterized in that** said support or "fourth wall" is made of thermoplastic material selected from ABS, PC+ABS, PC, PC+PBT, PC+ASA, ASA.

9. Multistep molding method for making colored plastic components with high aesthetic value, according to any one of the preceding claims 5 to 7, **characterized in that** said visible portion or "skin" is made of thermoplastic material selected from ABS, PC+ABS, PC, PC+PBT, PC+ASA, ASA

10. Multistep molding method for making colored plastic components with high aesthetic value, according to any one of the preceding claims 5 to 9, **characterized in that** said coating is made of colored polyurea or polyurethane.

## Patentansprüche

1. Mehrstationenform (200) zur Herstellung von farbigen Kunststoffkomponenten mit hohem ästhetischem Wert, versehen mit einem Drehtisch (150), der mit einer Mehrzahl von Seiten versehen ist, von denen jede zumindest eine Matrize mit der gewünschten Form der Kunststoffkomponente aufweist, wobei die Form (200) eine Mehrzahl von Stempeln aufweist, die dazu geeignet sind, reversibel auf den Matrizen des Drehtisches (150) geschlossen zu werden, wobei jeder Stempel eine Einspritzstation zum Einspritzen eines Kunststoffpolymers definiert, das geeignet ist, einen Teil in Herstellung befindlichen Kunststoffkomponente zu bilden; wobei die Form (200) geeignet ist, zyklisch eine erste geschlossene Konfiguration, in der in den Einspritzstationen die Druckeinspritzung eines vorgegebenen Kunststoffpolymers in den jeweiligen Zwischenraum erfolgt, und eine zweite offene Konfiguration, in der die Matrizen der Einspritzstationen weit von dem zentralen Drehtisch (150) entfernt sind, um es dem Drehtisch (150) zu ermöglichen, sich um seine Achse zu drehen, wobei der Inhalt des Zwischenraums jeder Station auf die nachfolgende Station übertragen wird, anzunehmen; wobei die Form (200) aufweist:
- eine erste Einspritzstation (100), die dazu geeignet ist, einen der Stempel des leeren Drehtisches (150) aufzunehmen; wobei die erste Einspritzstation (100) dazu geeignet ist, in den entsprechenden Zwischenraum das Kunststoffmaterial einzuspritzen, das geeignet ist, den sichtbaren Teil der herzustellenden Kunststoffkomponente, der üblicherweise als "Haut" bezeichnet wird, zu bilden;
- eine zweite Einspritzstation (120), die dazu geeignet ist, einen der Stempel des Drehtisches (150) aufzunehmen, der von der ersten Kontrollstation (110) kommt, so dass der Zwischenraum der zweiten Station (120) bereits teilweise mit der "Haut" der herzustellenden Kunststoffkomponente gefüllt ist; wobei die zweite Einspritzstation (120) dazu geeignet ist, in den relativen Zwischenraum das Kunststoffmaterial einzuspritzen, das geeignet ist, den Träger, der üblicherweise als "vierte Wand" der herzustellenden Kunststoffkomponente bezeichnet wird, zu bilden, indem es der "Haut" überlagert wird;
- eine dritte Einspritzstation (130), die dazu geeignet ist, einen der Stempel des Drehtisches (150) aufzunehmen, der von der zweiten Station (120) kommt, so dass der Zwischenraum der dritten Station (130) bereits teilweise mit der "vierten Wand" und dem sichtbaren Teil der herzustellenden Kunststoffkomponente gefüllt ist; wobei die dritte Einspritzstation (130) dazu geeignet ist, in den entsprechenden Zwischenraum das gefärbte Kunststoffmaterial einzuspritzen, das dazu geeignet ist, die äußere Oberfläche des sichtbaren Teils der herzustellenden Kunststoffkomponente zu bemalen;
wobei die Mehrstationenform (200) **dadurch gekennzeichnet ist, dass** sie aufweist:
- eine erste Kontrollstation (110), die dazu geeignet ist, ein optisches Scannen des von der ersten Einspritzstation (100) kommenden Produkts durchzuführen, wobei die detektierten kolorimetrischen Daten an einen Computer (400) gesendet werden;
- eine zweite Kontrollstation (121), die dazu geeignet ist, ein optisches Scannen des von der zweiten Einspritzstation (120) kommenden Produkts durchzuführen und die detektierten Größen und kolorimetrischen Daten an den Computer (400) zu senden;
- eine dritte Kontrollstation (131), die dazu geeignet ist, ein optisches Scannen des von der dritten Einspritzstation (130) kommenden Produkts durchzuführen und die Größen und kolorimetrischen Daten an den Computer (400) zu senden;
- eine Entlade- und Sortierstation (140), in der die soeben produzierte Kunststoffkomponente mittels eines üblichen mechanischen Förderers ergriffen und auf einem ersten Förderband für die akzeptierten Produkte oder einem zweiten Förderband für die auszusondernden Produkte platziert wird;
- den Computer (400), der dazu geeignet ist, alle Daten von den Kontrollstationen (110-121-131) zu empfangen und einen Vergleich mit den vorher festgelegten Grenzwerten durchzuführen und möglicherweise ein Alarmsignal auszugeben, wenn solche Grenzwerte überschritten werden.

2. Mehrstationenform (200) zur Herstellung von farbigen Kunststoffkomponenten mit hohem ästhetischem Wert gemäß dem vorhergehenden Anspruch 1, **dadurch gekennzeichnet, dass** die dritte Kontrollstation (131) und die Entladestation (140) zusammenfallen.

3. Mehrstationenform (200) zur Herstellung von farbigen Kunststoffkomponenten mit hohem ästhetischem Wert gemäß einem der vorhergehenden Ansprüche 1 oder 2, **dadurch gekennzeichnet, dass** sie dazu geeignet ist, das Öffnen der Matrizen und die Drehung des Drehtisches (150) in regelmäßigen und vorher festgelegten Zeitintervallen mit einer Dauer zwischen 30 Sekunden und 120 Sekunden, vorzugsweise 60 Sekunden, durchzuführen.

4. Mehrstationenform (200) zur Herstellung von farbigen Kunststoffkomponenten mit hohem ästhetischem Wert gemäß einem der vorhergehenden Ansprüche, **dadurch gekennzeichnet, dass** unmittelbar stromabwärts einer jeden Einleitungsdüse jeder Einleitungsstation (100-120-130) ein Filter (180) vorhanden ist, der dazu geeignet ist, mögliche Verunreinigungen, die in der eingespritzten Polymermischung vorhanden sind, zurückzuhalten.

5. Mehrstufiges Formverfahren zur Herstellung von farbigen Kunststoffkomponenten mit hohem ästhetischem Wert, ausgeführt durch eine Mehrstationenform (200) gemäß einem der vorhergehenden Ansprüche, das die folgenden Schritte, die zyklisch wiederholt werden, aufweist:
- erstes Einspritzen (1000) des sichtbaren Teils oder der "Haut" der herzustellenden Kunststoffkomponente in den Zwischenraum einer ersten Einspritzstation (100) einer Form (200) mit Drehtisch (150) gemäß einem der vorhergehenden Ansprüche;
- Abwarten der Zeit der Verfestigung des Kunststoffmaterials, erstes Öffnen der Form (200), erste Drehung des Drehtisches (150);
- neues Schließen der Form (200) und zweites Einspritzen (1200) des Trägers oder der "vierten Wand" der herzustellenden Kunststoffkomponente in den Zwischenraum einer zweiten Einspritzstation (120) der Form (200), wobei der Zwischenraum in seinem Inneren vor dem zweiten Einspritzen die bereits verfestigte "Haut" aufweist;
- Abwarten der Zeit der Verfestigung des Kunststoffmaterials, zweites Öffnen der Form (200), zweite Drehung des Drehtisches (150);
- neues Schließen der Form (200) und drittes Einspritzen (1300) des Kunststoffpolymers zum Beschichten des sichtbaren Teils der herzustellenden Kunststoffkomponente in den Zwischenraum einer dritten Einspritzstation (130) der Form (200); wobei der Zwischenraum in seinem Inneren vor dem dritten Einspritzen (1300) die "vierte Wand" und den bereits verfestigten sichtbaren Teil aufweist;
- Abwarten der Zeit der Verfestigung des Kunststoffmaterials, drittes Öffnen der Form (200), dritte Drehung des Drehtisches (150);
wobei das Verfahren **dadurch gekennzeichnet ist, dass** es aufweist:
- eine erste optische Kontrolle (1100) in einer ersten Kontrollstation (110) und Senden der detektierten Größendaten an einen Computer (400), der mit den Akzeptanzgrenzwerten für die Größe und mit möglichen Toleranzen voreingestellt ist;
- eine zweite optische Kontrolle, die einen Größenkontrollschritt (1210) und einen kolorimetrischen Kontrollschritt (1220) zum Überprüfen der Dicke und der Farbe der gesamten Komponente enthält, wobei die detektierten Daten an den Computer (400) gesendet werden, der mit den Akzeptanzgrenzwerten für die Größe und mit möglichen Toleranzen voreingestellt ist;
- eine dritte optische Kontrolle, die einen Größenkontrollschritt (1310) und einen kolorimetrischen Kontrollschritt (1320) zum Überprüfen der Dicke und der Farbe der gesamten Komponente enthält, wobei die detektierten Daten an den Computer (400) gesendet werden, der mit den Akzeptanzgrenzwerten für die Größe und mit möglichen Toleranzen voreingestellt ist;
- neues Schließen der Form (200) und Entnehmen der Kunststoffkomponente in einer Entladestation (140) der Form (200) mittels eines üblichen mechanischen Förderers, der die inzwischen bemalte Kunststoffkomponente ergreift und sie auf einem ersten Förderband, das für die akzeptierten Teile bestimmt ist, und auf einem zweiten Förderband, das für die auszusondernden Teile bestimmt ist, weil sie die voreingestellten Schwellenwerte überschritten haben, von der Form (200) wegbewegt.

6. Mehrstufiges Formverfahren zur Herstellung von farbigen Kunststoffkomponenten mit hohem ästhetischem Wert nach dem vorhergehenden Anspruch 5, **dadurch gekennzeichnet, dass** der Computer (400) dazu geeignet ist, ein Alarmsignal (1500) auszugeben, wenn eine der Kontrollstationen (110-121-131) einen Wert detektiert, der die voreingestellten Grenzwerte überschreitet.

7. Mehrstufiges Formverfahren zur Herstellung von farbigen Kunststoffkomponenten mit hohem ästhetischem Wert gemäß einem der vorhergehenden Ansprüche 5 oder 6, **dadurch gekennzeichnet, dass** der Computer (400), wenn die erste Kontrollstation (110) oder die zweite Kontrollstation (121) Werte innerhalb eines Toleranzbereichs der Schwellenwerte detektiert, eine Reduzierung der Toleranzgrenzen für die nachfolgende Kontrollstation durchführt.

8. Mehrstufiges Formverfahren zur Herstellung von farbigen Kunststoffkomponenten mit hohem ästhetischem Wert gemäß einem der vorhergehenden Ansprüche 5 bis 6, **dadurch gekennzeichnet, dass** der Träger oder die "vierte Wand" aus einem thermoplastischen Material, das ausgewählt ist aus ABS, PC+ABS, PC, PC+PBT, PC+ASA, ASA hergestellt ist.

9. Mehrstufiges Formverfahren zur Herstellung von farbigen Kunststoffkomponenten mit hohem ästhetischem Wert gemäß einem der vorhergehenden Ansprüche 5 bis 7, **dadurch gekennzeichnet, dass** der sichtbare Teil oder die "Haut" aus einem thermoplastischen Material, das ausgewählt ist aus ABS, PC+ABS, PC, PC+PBT, PC+ASA, ASA, hergestellt ist.

10. Mehrstufiges Formverfahren zur Herstellung von farbigen Kunststoffkomponenten mit hohem ästhetischem Wert gemäß einem der vorangehenden Ansprüche 5 bis 9, **dadurch gekennzeichnet, dass** die Beschichtung aus farbigem Polyharnstoff oder Polyurethan hergestellt ist.

## Revendications

1. Moule (200) à stations multiples pour la fabrication de composants en plastique colorés à haute valeur esthétique, doté d'une table rotative (150) dotée d'une pluralité de côtés, chacun d'entre eux comprenant au moins une matrice avec la forme souhaitée du composant en plastique, ledit moule (200) comprenant une pluralité de poinçons adaptés pour être fermés de manière réversible sur lesdites matrices de ladite table rotative (150), chaque poinçon définissant une station d'injection destinée à injecter un polymère plastique adapté pour constituer une partie du composant en plastique en cours de production ; ledit moule (200) étant adapté pour prendre de manière cyclique une première configuration fermée, dans laquelle l'injection par pression se produit, dans lesdites stations d'injection, d'un polymère plastique prédéterminé à l'intérieur de l'espace intermédiaire relatif, et une deuxième configuration ouverte dans laquelle les matrices desdites stations d'injection sont éloignées de ladite table rotative (150) centrale afin de permettre à ladite table rotative (150) de tourner autour de son axe, transférant le contenu de l'espace intermédiaire de chaque station vers la station suivante ; ledit moule (200) comprenant :
une première station d'injection (100) adaptée pour recevoir un des poinçons de ladite table rotative (150) vide ; ladite première station d'injection (100) étant adaptée pour injecter dans l'espace intermédiaire relatif la matière plastique appropriée pour former la partie visible du composant en plastique à fabriquer, désignée communément par le terme de « peau » ;
une deuxième station d'injection (120) adaptée pour recevoir un des poinçons de ladite table rotative (150) provenant de ladite première station de commande (110) et par conséquent l'espace intermédiaire de ladite deuxième station (120) qui est déjà partiellement rempli avec ladite « peau » du composant en plastique à fabriquer ; ladite deuxième station d'injection (120) étant adaptée pour injecter, dans l'espace intermédiaire relatif, la matière plastique appropriée pour constituer le support, communément nommé la « quatrième paroi » du composant en plastique à fabriquer, la superposant sur ladite « peau » ;
une troisième station d'injection (130) adaptée pour recevoir un des poinçons de ladite table rotative (150) provenant de ladite deuxième station (120) et par conséquent l'espace intermédiaire de ladite troisième station (130) qui est déjà partiellement rempli avec ladite « quatrième paroi » et ladite partie visible du composant en plastique à fabriquer ; ladite troisième station d'injection (130) étant adaptée pour injecter, dans l'espace intermédiaire relatif, la matière plastique colorée appropriée pour peindre la surface extérieure de la partie visible du composant en plastique à fabriquer ;
ledit moule (200) à stations multiples étant **caractérisé en ce qu'**il comprend :
une première station de commande (110) adaptée pour exécuter un balayage optique du produit provenant de la première station d'injection (100), envoyant les données colorimétriques détectées à un ordinateur (400) ;
une deuxième station de commande (121) adaptée pour exécuter un balayage optique du produit provenant de la deuxième station d'injection (120), envoyant les données colorimétriques et de taille détectées audit ordinateur (400) ;
une troisième station de commande (131) adaptée pour exécuter un balayage optique du produit provenant de la troisième station d'injection (130), envoyant les données colorimétriques et de taille audit ordinateur (400) ;
une station de déchargement et de tri (140) dans laquelle, au moyen d'un dispositif de déplacement mécanique commun, le composant en plastique venant d'être produit est saisi et placé sur une première courroie transporteuse pour les produits acceptés ou sur une deuxième courroie transporteuse pour les produits devant être écartés ;
ledit ordinateur (400), qui est approprié pour recevoir toutes les données provenant desdites stations de commande (110-121-131) et pour effectuer une comparaison avec les valeurs limites préétablies, émettant éventuellement un signal d'alarme si de telles limites sont dépassées.

2. Moule (200) à stations multiples pour la fabrication de composants en plastique colorés à haute valeur esthétique, selon la revendication 1 précédente, **caractérisé en ce que** ladite troisième station de commande (131) et ladite station de déchargement (140) coïncident.

3. Moule (200) à stations multiples pour la fabrication de composants en plastique colorés à haute valeur esthétique, selon l'une des revendications 1 ou 2 précédentes, **caractérisé en ce qu'**il est approprié pour exécuter l'ouverture des matrices et la rotation de ladite table rotative (150) à intervalles de temps réguliers et préétablis d'une durée comprise entre 30 secondes et 120 secondes, de préférence 60 secondes.

4. Moule (200) à stations multiples pour la fabrication de composants en plastique colorés à haute valeur esthétique, selon l'une des revendications précédentes, **caractérisé en ce qu'**immédiatement en aval de chaque buse d'introduction de chaque station d'introduction (100-120-130), un filtre (180) est présent et est approprié pour retenir les éventuelles impuretés présentes dans le mélange de polymère injecté.

5. Procédé de moulage en plusieurs étapes pour la fabrication de composants en plastique colorés à haute valeur esthétique, exécuté par un moule (200) à stations multiples selon l'une des revendications précédentes, comprenant les étapes suivantes qui sont répétées de manière cyclique :
première injection (1000) de la partie visible ou de la « peau » du composant en plastique à fabriquer, dans l'espace intermédiaire d'une première station d'injection (100) d'un moule (200) doté d'une table rotative (150) selon l'une des revendications précédentes ;
attente pendant la durée de solidification de la matière plastique, première ouverture du moule (200), première rotation de ladite table rotative (150) ;
nouvelle fermeture du moule (200) et deuxième injection (1200) du support ou de la « quatrième paroi » du composant en plastique à fabriquer, dans l'espace intermédiaire d'une deuxième station d'injection (120) dudit moule (200), ledit espace intermédiaire ayant au niveau de sa partie intérieure, avant la deuxième injection, ladite « peau » déjà solidifiée ;
attente pendant la durée de solidification de la matière plastique, deuxième ouverture du moule (200), deuxième rotation de ladite table rotative (150) ;
nouvelle fermeture du moule (200) et troisième injection (1300) du polymère plastique en vue du revêtement de ladite partie visible du composant en plastique à fabriquer, dans l'espace intermédiaire d'une troisième station d'injection (130) dudit moule (200) ; ledit espace intermédiaire ayant au niveau de sa partie intérieure, avant la troisième injection (1300), ladite « quatrième paroi » et ladite partie visible déjà solidifiées ;
attente pendant la durée de solidification de la matière plastique, troisième ouverture du moule (200), troisième rotation de ladite table rotative (150) ;
ledit procédé étant **caractérisé en ce qu'**il comprend :
une première commande optique (1100) dans une première station de commande (110) et l'envoi des données de taille détectées à un ordinateur (400) prédéfini avec les valeurs-seuils d'acceptabilité de taille et avec les tolérances possibles ;
une deuxième commande optique comportant une étape de commande de taille (1210) et une étape de commande colorimétrique (1220) pour vérifier l'épaisseur et la couleur de l'ensemble du composant, l'envoi des données détectées audit ordinateur (400) prédéfini avec les valeurs-seuils d'acceptabilité de taille et avec les tolérances possibles ;
une troisième commande optique comportant une étape de commande de taille (1310) et une étape de commande colorimétrique (1320) pour vérifier l'épaisseur et la couleur de l'ensemble du composant, l'envoi des données détectées audit ordinateur (400) prédéfini avec les valeurs-seuils d'acceptabilité de taille et avec les tolérances possibles ;
nouvelle fermeture du moule (200) et déchargement du composant en plastique dans une station de déchargement (140) dudit moule (200) au moyen d'un dispositif de déplacement mécanique commun qui saisit le composant en plastique qui a désormais été peint et l'éloigne dudit moule (200) sur une première courroie transporteuse destinée aux pièces acceptées et sur une deuxième courroie transporteuse destinée aux pièces devant être écartées dans la mesure où il a été déterminé qu'elles dépassaient les seuils prédéfinis.

6. Procédé de moulage en plusieurs étapes pour la fabrication de composants en plastique colorés à haute valeur esthétique, selon la revendication 5 précédente, **caractérisé en ce que** ledit ordinateur (400) est approprié pour émettre un signal d'alarme (1500) si une des stations de commande (110-121-131) a détecté une valeur dépassant les valeurs-seuils prédéfinies.

7. Procédé de moulage en plusieurs étapes pour la fabrication de composants en plastique colorés à haute valeur esthétique, selon l'une des revendications 5 ou 6 précédentes, **caractérisé en ce que** si la première station de commande (110) ou la deuxième station de commande (121) vient à détecter des valeurs à l'intérieur d'une plage de tolérances desdites valeurs-seuils, ledit ordinateur (400) exécute une réduction des limites de tolérance pour la station de commande suivante.

8. Procédé de moulage en plusieurs étapes pour la fabrication de composants en plastique colorés à haute valeur esthétique, selon l'une des revendications 5 à 6 précédentes, **caractérisé en ce que** ledit support ou ladite « quatrième paroi » est constitué(e) de matière thermoplastique choisie parmi ABS, PC + ABS, PC, PC + PBT, PC + ASA, ASA.

9. Procédé de moulage en plusieurs étapes pour la fabrication de composants en plastique colorés à haute valeur esthétique, selon l'une des revendications 5 à 7 précédentes, **caractérisé en ce que** ladite partie visible ou ladite « peau » est constituée de matière thermoplastique choisie parmi ABS, PC + ABS, PC, PC + PBT, PC + ASA, ASA.

10. Procédé de moulage en plusieurs étapes pour la fabrication de composants en plastique colorés à haute valeur esthétique, selon l'une des revendications 5 à 9 précédentes, **caractérisé en ce que** ledit revêtement est constitué de polyrésine colorée ou de polyuréthane coloré.
